# EUROPÄISCHE PATENTSCHRIFT

(11) **EP 1 913 045 B1**
(45) Veröffentlichungstag und Bekanntmachung des Hinweises auf die Patenterteilung: **03.12.2008**
(21) Anmeldenummer: 06777740.9
(22) Anmeldetag: 13.07.2006
(51) Int. Cl.: C08G 2/10, C08J 11/02, C08L 59/00

(54) **VERFAHREN ZUR HERSTELLUNG VON POLYOXYMETHYLENEN**
METHOD FOR PRODUCING POLYOXYMETHYLENES
PROCEDE DE PRODUCTION DE POLYOXYMETHYLENES

(30) Priorität: 20.07.2005 DE 102005034490
(43) Veröffentlichungstag der Anmeldung: 23.04.2008
(73) Patentinhaber: BASF SE, 67056 Ludwigshafen (DE)
(72) Erfinder: BLINZLER, Marko, 68163 Mannheim (DE); ZÖLLNER, Knut, 68165 Mannheim (DE); SCHWITTAY, Claudius, 68165 Mannheim (DE); ASSMANN, Jens, 68165 Mannheim (DE)
(86) Internationale Anmeldenummer: PCT/EP2006/064175
(87) Internationale Veröffentlichungsnummer: WO 2007/009925

(56) Entgegenhaltungen:
- EP-A- 0 629 644
- WO-A-20/05012380
- US-A- 5 144 005
- US-A- 5 608 030
- US-A- 5 844 059
- US-A1- 2003 018 104

## Beschreibung

Die Erfindung betrifft ein Verfahren zur Herstellung von Polyoxymethylencopolymeren (POM) durch a) Polymerisation eines Reaktionsgemisches enthaltend geeignete Hauptmonomere und Comonomere sowie einen Polymerisationsinitiator und ggf. einen Regler, b) Zugabe eines Desaktivators, und c) Entfernung der Restmonomeren, dadurch gekennzeichnet, dass zu jedem Zeitpunkt des Verfahrens im Reaktionsgemisch die Menge der Verbindungen, deren Schmelzpunkt bei 1013 hPa unter 60°C liegt, maximal 0,1 Gew.-% beträgt, wobei das POM, die Monomere, Comonomere, Polymerisationsinitiatoren, Desaktivatoren und Regler nicht mitgerechnet werden.

Weiterhin betrifft die Erfindung ein Verfahren zur Herstellung von Polyoxymethylencopolymeren (POM), dadurch gekennzeichnet, dass die Polymere mit dem erstgenannten Verfahren hergestellt werden und danach d) übliche Additive zugefügt werden.

Außerdem betrifft die Erfindung die nach den beiden Verfahren erhältlichen Polyoxymethylencopolymere.

Polyoxymethylenpolymere (POM, auch Polyacetale genannt) werden durch Polymerisation von 1,3,5-Trioxan (kurz: Trioxan) oder einer anderen Formaldehydquelle erhalten, wobei zur Herstellung von Copolymeren Comonomere wie 1,3-Dioxolan, 1,3-Butandiolformal oder Ethylenoxid mitverwendet werden. Die Polymerisation wird üblicherweise kationisch durchgeführt; dazu werden starke Protonensäuren, beispielsweise Perchlorsäure, oder Lewis-Säuren wie Zinntetrachlorid oder Bortrifluorid, als Initiatoren (Katalysatoren) in den Reaktor dosiert. Anschließend bricht man die Reaktion üblicherweise durch Zugabe von Ammoniak, Aminen, Alkalimetallalkoholaten oder anderen basischen Desaktivatoren ab.

Der Umsatz bei der Polymerisation ist üblicherweise nicht vollständig, vielmehr enthält das POM-Rohpolymerisat noch bis zu 40 % nicht umgesetzter Monomere. Solche Restmonomere sind beispielsweise Trioxan und Formaldehyd, sowie ggf. die mitverwendeten Comonomere. Die Restmonomere werden in einer Entgasungsvorrichtung abgetrennt. Es wäre ökonomisch vorteilhaft, sie unmittelbar und ohne weitere Reinigungsoperationen in die Polymerisation zurückzuführen.

Üblicherweise werden bei der POM-Herstellung Lösungsmittel mitverwendet. Beispielsweise fügt man Initiator und Desaktivator in der Regel verdünnt in einem Lösungsmittel hinzu, da sich andernfalls die erforderlichen geringen Mengen nicht präzise dosieren und/oder nicht gleichmäßig im Reaktorinhalt bzw. im Reaktionsgemisch verteilen lassen.

Die Lösungsmittel oder sonstige Zusatzstoffe können sich entweder bei einer Rückführung der abgetrennten Restmonomere anreichern und durch diese Aufpegelung das Verfahren stören, oder vollständig oder zumindest in Restmengen im Polymer verbleiben und das daraus hergestellte Formteil durch Migration, Ausschwitzen oder Belagsbildung beeinträchtigen. Außerdem kann die Polymerisation durch Nebenreaktionen gestört werden.

Das Patent BE 702 357 schlägt vor, bei der Herstellung von Trioxan-Copolymeren den Initiator Bortrifluorid gelöst in einem cyclischen Formal wie 1,3-Dioxolan, also dem Comonomer, zuzufügen. Der Katalysator wird durch anschließendes Behandeln der Rohpolymers mit Wasser oder basischen Verbindungen deaktiviert.

Gemäß Derwent-Abstract Nr. 1999-629313/54 zu JP 11279245 wird ein Trioxan-Copolymer durch Zugabe einer Mischung von Bortrifluorid in 1 ,3-Dioxolan zu Trioxan hergestellt, der Initiator durch Behandeln des POM mit wässriger Triethylaminlösung deaktiviert, und das POM gewaschen und getrocknet.

Die Derwent-Abstracts Nr. 1999-585962/50 zu JP 11255853 und 99-226243/19 zu JP 11060663 offenbaren ähnliche Verfahren, ohne allerdings die Deaktivierung näher zu beschreiben.

Gemäß der nicht vorveröffentlichten deutschen Patentanmeldung Az. 102004057867.2 vom 30.11.04, Seite 10 Zeilen 27-39 wird der Desaktivator gelöst in Trioxan, Dioxolan oder einem anderen Monomer, oder in einer Trägersubstanz wie oligomerem oder polymerem POM, zugefügt. Allerdings wird der Katalysator gemäß Seite 6 Zeilen 9-15 in einem Lösungsmittel gelöst zugefügt, beispielsweise in Cyclohexan oder 1,4-Dioxan.

Die nicht vorveröffentlichte deutsche Patentanmeldung Az. 102005012482.8 vom 16.03.05 beschreibt ein Verfahren zur POM-Herstellung, bei dem die Menge der Protonendonatoren kleiner 5000 ppm beträgt. Gemäß Seite 6, Zeilen 5 bis 12 wird der Initiator mit einem Lösungsmittel verdünnt zugegeben.

Demnach wird bei den genannten Verfahren entweder der Initiator (Katalysator) oder der Desaktivator unter Verwendung eines Lösungsmittels zugefügt. Ein komplett lösungsmittelfreies Verfahren wird nicht beschrieben.

Es bestand die Aufgabe, den geschilderten Nachteilen abzuhelfen. Insbesondere sollte ein verbessertes Verfahren zur POM-Herstellung bereitgestellt werden. Vorzugsweise sollten bei dem Verfahren die abgetrennten Restmonomere unmittelbar und ohne weitere Reinigung in die Polymerisation zurückgeführt werden können.

Demgemäß wurde das eingangs definierte Verfahren, und die eingangs genannten Polymere, gefunden. Bevorzugte Ausführungsformen der Erfindung sind den Unteransprüchen zu entnehmen. Alle Druckangaben sind Absolutdrucke.

### Polyoxymethylencopolymere

Die Polyoxymethylencopolymere (POM) sind als solche bekannt und handelsüblich. Sie werden üblicherweise durch Polymerisation von Trioxan als Hauptmonomere hergestellt; außerdem werden Comonomere mitverwendet. Bevorzugt sind die Hauptmonomere ausgewählt aus Trioxan und anderen cyclischen oder linearen Formalen bzw. sonstigen Formaldehyd-Quellen.

Die Bezeichnung Hauptmonomere soll ausdrücken, dass der Anteil dieser Monomere an der Gesamtmonomermenge, also der Summe von Haupt- und Comonomeren, größer ist als der Anteil der Comonomere an der Gesamtmonomermenge.

Ganz allgemein weisen derartige POM-Polymere mindestens 50 mol-% an wiederkehrenden Einheiten -CH₂O- in der Polymerhauptkette auf. Geeignete Polyoxymethylencopolymere sind insbesondere solche, die neben den wiederkehrenden Einheiten -CH₂O- noch bis zu 50, vorzugsweise 0,01 bis 20, insbesondere 0,1 bis 10 mol-% und ganz besonders bevorzugt 0,5 bis 6 mol-% an wiederkehrenden Einheiten 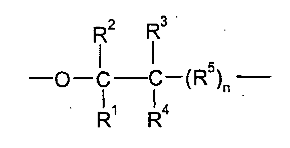 enthalten, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 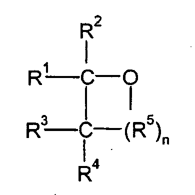 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan, und 1,3-Dioxepan (= Butandiolformal, BUFO) als cyclische Ether genannt sowie lineare Oligo- oder Polyformale wie Polydioxolan oder Polydioxepan als Comonomere genannt, 1,3-Dioxolan ist ein besonders bevorzugtes Comonomer.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 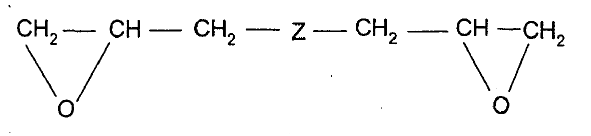 und/oder 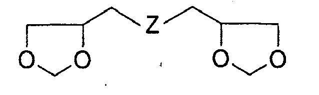 wobei Z eine chemische Bindung, -O-, -ORO- (R gleich C₁- bis C₈-Alkylen oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden überwiegend C-C-oder-O-CH₃-Bindungen aufweisen, werden besonders bevorzugt.

Die bevorzugten Polyoxymethylencopolymere haben Schmelzpunkte von mindestens 150°C und Molekulargewichte (Gewichtsmittelwert) M_{w} im Bereich von 5.000 bis 300.000, vorzugsweise von 7.000 bis 250.000. Insbesondere bevorzugt sind POM-Copolymerisate mit einer Uneinheitlichkeit (M_{w}/Mₙ) von 2 bis 15, bevorzugt von 2,5 bis 12, besonders bevorzugt 3 bis 9. Die Messungen erfolgen in der Regel über Gelpermeationschromatographie (GPC) / SEC (size exclusion chromatography), der Mₙ-Wert (Zahlenmittel des Molekulargewichtes) wird im allgemeinen bestimmt mittels GPC/SEC.

### Regler und Initiatoren

Die Molekulargewichte des Polymeren können gegebenenfalls durch die bei der Trioxanpolymerisation üblichen Regler, sowie durch die Reaktionstemperatur und -verweilzeit auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden lässt, in Frage. Die Regler werden in Mengen von 10 bis 10.000 ppm, vorzugsweise von 20 bis 5.000 ppm, eingesetzt. Methylal und Butylal sind bevorzugte Regler.

Bevorzugt initiiert man die Polymerisation kationisch. Als Polymerisationsinitiatoren (auch als Katalysatoren bezeichnet) werden die bei der Trioxanpolymerisation üblichen kationischen Starter verwendet. Es eignen sich Protonensäuren, wie fluorierte oder chlorierte Alkyl- und Arylsulfonsäuren, z.B. Perchlorsäure, Trifluormethansulfonsäure oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Bevorzugt verwendet man Protonensäuren als Polymerisationsinitiator. Besonders bevorzugt ist Perchlorsäure.

Die Initiatoren (Katalysatoren) werden in Mengen von etwa 0,01 bis 500 ppmw (parts per million by weight), vorzugsweise 0,01 bis 200 ppmw und insbesondere von 0,01 bis 100 ppmw, bezogen auf die eingesetzten Monomere, eingesetzt. Im allgemeinen empfiehlt es sich, den Initiator in verdünnter Form zuzusetzen, um die genannten geringen Initiatormengen präzise dosieren und homogen verteilen zu können.

In einer bevorzugten Ausführungsform wird der Initiator dem Reaktionsgemisch ohne Mitverwendung von Lösungsmitteln zugefügt. Solche bevorzugt nicht mitverwendeten Lösungsmittel wären beispielsweise aliphatische oder cycloaliphatische Kohlenwasserstoffe z.B. Cyclohexan, 1,4-Dioxan, halogenierte aliphatische Kohlenwasserstoffe, Glykolether wie Triglyme (Triethylenglykoldimethylether), cyklische Carbonate wie Propylencarbonat oder Lactone wie gamma-Butyrolacton.

Besonders bevorzugt löst man den Initiator in einer Teilmenge der Comonomeren oder in der Gesamtmenge der Comonomeren und fügt die erhaltene Initiatorlösung dem Reaktionsgemisch zu. Besonders bevorzugt verwendet man eine Teilmenge und nicht die Gesamtmenge der Comonomere, wobei diese Teilmenge vorzugsweise 0,1 bis 80, insbesondere 0,5 bis 20 Gew.-% der Comonomergesamtmenge ausmacht.

Demnach ist das erfindungsgemäße Verfahren bevorzugt dadurch gekennzeichnet, dass der Polymerisationsinitiator dem Reaktionsgemisch gelöst in einer Teilmenge oder der Gesamtmenge der Comonomere zugefügt wird. Die Konzentration des Initiators in der Initiatorlösung beträgt in der Regel 0,005 bis 5 Gew.-%.

Die Begriffe Lösung bzw. lösen sollen für schlechtlösliche Initiatoren Suspension bzw. suspendieren einschließen.

Haupt- und Comonomere, Initiatoren und ggf. Regler können auf beliebige Weise vorgemischt oder auch getrennt voneinander dem Polymerisationsreaktor zugegeben werden. Ferner können die Komponenten zur Stabilisierung sterisch gehinderte Phenole enthalten wie in EP-A 129369 oder EP-A 128739 beschrieben.

### Desaktivatoren

Anschließend an die Polymerisation wird die Polymerisationsmischung desaktiviert, vorzugsweise ohne dass eine Phasenveränderung erfolgt. Die Desaktivierung der Initiatorreste (Katalysatorreste) erfolgt durch Zugabe eines Desaktivators (Abbruchmittels) zum Reaktionsgemisch.

Geeignete Desaktivatoren sind z.B. Ammoniak sowie primäre, sekundäre oder tertiäre, aliphatische und aromatische Amine, z.B. Trialkylamine wie Triethylamin, oder Triacetondiamin. Ebenfalls geeignet sind basisch reagierende Salze, wie Soda und Borax, weiterhin die Carbonate und Hydroxide der Alkali- und Erdalkalimetalle. Als Desaktivatoren eignen sich außerdem organische Verbindungen der Alkali- und Erdalkalimetalle.

Solche organischen Verbindungen sind insbesondere Salze von aliphatischen, cycloaliphatischen, araliphatischen oder aromatischen Carbonsäuren mit bevorzugt bis zu 30 C-Atomen und bevorzugt 1 bis 4 Carboxylgruppen. Gut geeignet sind beispielsweise Natriumaceatat, -propionat, -butyrat, -oxalat, -malonat oder -succinat. Weiterhin sind Alkali- bzw. Erdalkalialkyle als Desaktivatoren bevorzugt, welche 2 bis 30 C-Atome im Alkylrest aufweisen. Als besonders bevorzugte Metalle seien Li, Mg und Na genannt, wobei n-Butyllithium besonders bevorzugt ist.

Gleichfalls bevorzugte Desaktivatoren sind Alkali- oder Erdalkalialkoholate, insbesondere solche mit 1 bis 15, insbesondere 1 bis 8 C-Atomen. Natriumalkoholate sind bevorzugt; vorzugsweise verwendet man Natriummethanolat, Natriumethanolat oder Natriumglyconat.

Die Desaktivatoren werden üblicherweise den Polymeren in Mengen von z.B. 0,01 ppmw bis 2 Gew.-%, bevorzugt 0,05 ppmw bis 0,5 Gew.-% und insbesondere 0,1 ppmw bis 0,1 Gew.-% zugesetzt. Im allgemeinen empfiehlt es sich, den Desaktivator in verdünnter Form zuzusetzen, um die genannten geringen Desaktivatormengen präzise dosieren und gleichmäßig verteilen zu können.

In einer bevorzugten Ausführungsform wird der Desaktivator dem Reaktionsgemisch ohne Mitverwendung von Lösungsmitteln zugefügt. Solche bevorzugt nicht mitverwendeten Lösungsmittel wären beispielsweise Wasser, Methanol, andere Alkohole oder sonstige organische Lösungsmittel.

Besonders bevorzugt löst man den Desaktivator in einer Trägersubstanz, die Etherstruktureinheiten aufweist, und fügt die erhaltene Desaktivatorlösung dem Reaktionsgemisch zu. Vorzugsweise eignen sich Trägersubstanzen, die dieselben Struktureinheiten aufweisen, die im jeweilig herzustellenden POM-Polymerisat vorhanden sind. Geeignete Trägermaterialien sind insbesondere die vorstehend aufgeführten Haupt- oder Comonomere sowie oligomeres bis polymeres Polyoxymethylen oder andere Polyacetale.

Die Begriffe Lösung bzw. lösen sollen für schlechtlösliche Desaktivatoren Suspension bzw. suspendieren einschließen. Unter Lösung soll auch eine Oligomer- oder Polymerschmelze verstanden werden.

Falls man Hauptmonomere zur Herstellung der Desaktivatorlösung verwendet, setzt man dazu eine Teilmenge der insgesamt beim Verfahren verwendeten Hauptmonomere ein, die üblicherweise 0,01 bis 10, bevorzugt 0,1 bis 5 Gew.-% der Hauptmonomergesamtmenge beträgt. Falls man Comonomere für die Desaktivatorlösung verwendet, setzt man ebenfalls eine Teilmenge der Comonomergesamtmenge ein, die in der Regel 0,01 bis 95, bevorzugt 0,1 bis 50 Gew.-% beträgt.

Falls man oligomeres oder polymeres POM zur Herstellung der Desaktivatorlösung verwendet, kann man beispielsweise einen sog. Masterbatch auf Basis von oligomerem oder polymerem POM einsetzen, der üblicherweise 0,01 ppmw bis 5 Gew.-%, bevorzugt 0,1 ppmw bis 1 Gew.-% des Desaktivators enthält.

Die vorzugsweise flüssige Zugabe des Desaktivators erfolgt beispielsweise bei Temperaturen von 140 bis 220°C. Werden als Trägersubstanzen oligomere oder polymere Polyoxymethylene verwendet, ist eine Zugabe in flüssiger Form bei Temperaturen von 160 bis 220°C ebenso bevorzugt. Derartige als Trägersubstanz fungierende Polyoxymethylene können gegebenenfalls übliche Additive enthalten. Zur Dosierung derartiger Schmelzen der Trägersubstanzen, welche die Desaktivatoren enthalten, werden vorzugsweise Vorrichtungen wie Seitenextruder, Stopfschnecke, Schmelzepumpe, Mischpumpe etc. eingesetzt.

Demnach ist das Verfahren bevorzugt dadurch gekennzeichnet, dass der Desaktivator dem Reaktionsgemisch gelöst in einer Teilmenge der Hauptmonomere oder der Comonomere, oder gelöst in einem oligomeren oder polymerem POM, zugefügt wird. Die Konzentration des Desaktivators in der Desaktivatorlösung (Trägersubstanz) beträgt vorzugsweise 0,001 bis 10, bevorzugt 0,01 bis 5, insbesondere 0,05 bis 2, ganz besonders bevorzugt 0,08 bis 1 Gew.-%.

### Ausgestaltung der Polymerisation

POM aus Formaldehyd sind in üblicher Weise durch Polymerisation in der Gasphase, in Lösung, durch Fällungspolymerisation oder in Masse (Substanz) herstellbar. POM aus Trioxan werden in der Regel durch Polymerisation in Masse erhalten, wozu man jegliche Reaktoren mit hoher Mischwirkung verwenden kann. Die Reaktionsführung kann dabei homogen erfolgen, z.B. in einer Schmelze, oder heterogen, z.B. als Polymerisation zu einem Feststoff oder Feststoffgranulat. Geeignet sind beispielsweise Schalenreaktoren, Pflugscharmischer, Rohrreaktoren, Listreaktoren, Kneter (z.B. Busskneter), Extruder mit beispielsweise einer oder zwei Schnecken, und Rührreaktoren, wobei die Reaktoren statische oder dynamische Mischer aufweisen können.

Bei einer Polymerisation in Masse, z.B. in einem Extruder, kann durch aufgeschmolzenes Polymer eine sog. Schmelzeabdichtung zum Extrudereinzug hin erzeugt werden, wodurch flüchtige Bestandteile im Extruder verbleiben. Man dosiert die Haupt- und Comonomere in die im Extruder vorhandene Polymerschmelze, gemeinsam oder getrennt von den Initiatoren (Katalysatoren), bei einer bevorzugten Temperatur der Reaktionsmischung von 62 bis 114°C. Bevorzugt werden auch die Monomere (Trioxan) in geschmolzenem Zustand dosiert, z.B. bei 60 bis 120°C.

Die Schmelzepolymerisation erfolgt in der Regel bei 1,5 bis 500 bar und 130 bis 300°C, und die Verweilzeit der Polymerisationsmischung im Reaktor beträgt üblicherweise 0,1 bis 20, bevorzugt 0,4 bis 5 min. Vorzugsweise führt man die Polymerisation bis zu einem Umsatz über 30 %, z.B. 60 bis 90 %.

Man erhält in jedem Falle ein Roh-POM, das wie erwähnt erhebliche Anteile, beispielsweise bis zu 40 %, an nicht umgesetzten Restmonomeren enthält, insbesondere Trioxan und Formaldehyd. Dabei kann Formaldehyd im Roh-POM auch dann vorliegen, wenn nur Trioxan als Monomer eingesetzt wurde, da es als Abbauprodukt des Trioxans entstehen kann. Außerdem können auch andere Oligomere des Formaldehyds vorliegen, z.B. das Tetramere Tetroxan.

Bevorzugt wird zur Herstellung des POM Trioxan als Monomer eingesetzt, weshalb auch die Restmonomere Trioxan enthalten, außerdem üblicherweise noch 0,5 bis 10 Gew.-% Tetroxan und 0,1 bis 75 Gew.-% Formaldehyd.

Aus dem Roh-POM werden die Restmonomeren entfernt. Dies erfolgt üblicherweise in einer Entgasungsvorrichtung; es eignen sich z.B. Entgasungstöpfe (Flash-Töpfe), Entgasungsextruder mit einer oder mehreren Schnecken, Filmtruder, Dünnschichtverdampfer, Sprühtrockner, Strangentgaser und andere übliche Entgasungsvorrichtungen.

Bevorzugt verwendet man Entgasungsextruder oder Entgasungstöpfe. Letztere sind besonders bevorzugt.

Die Entgasung kann einstufig (in einer einzigen Entgasungsvorrichtung) erfolgen. Ebenso kann sie mehrstufig - beispielsweise zweistufig - in mehreren Entgasungsvorrichtungen erfolgen. Bei der mehrstufigen Entgasung können die Entgasungsvorrichtungen in Art und Größe gleich oder verschieden sein. Bevorzugt verwendet man zwei verschiedene Entgasungstöpfe hintereinander, wobei der zweite Topf ein kleineres Volumen aufweist.

Bei einer einstufigen Entgasung liegt der Druck in der Entgasungsvorrichtung üblicherweise bei 0,1 mbar bis 10 bar, bevorzugt 1 mbar bis 2 bar und besonders bevorzugt 5 mbar bis 800 mbar, und die Temperatur in der Regel bei 100 bis 260, vorzugsweise 115 bis 230 und insbesondere 150 bis 210°C. Bei einer zweistufigen Entgasung beträgt der Druck in der ersten Stufe bevorzugt 0,1 mbar bis 10 bar, insbesondere 0,5 mbar bis 8 bar und besonders bevorzugt 1 mbar bis 7 bar, und in der zweiten Stufe bevorzugt 0,1 mbar bis 5 bar, insbesondere 0,5 mbar bis 2 bar und besonders bevorzugt 1 mbar bis 1,5 bar. Die Temperatur unterscheidet sich bei einer zweistufigen Entgasung in der Regel nicht wesentlich von den für die einstufige Entgasung genannten Temperaturen.

Die Verweilzeit des Polymeren in der Entgasungsvorrichtung beträgt in der Regel 0,1 sec bis 30 min, bevorzugt 0,1 sec bis 20 min. Bei einer mehrstufigen Entgasung beziehen sich diese Zeiten auf jeweils eine einzige Stufe.

Die bei der Entgasung freiwerdenden Restmonomere werden als Brüdenstrom abgetrennt. Unabhängig von der Ausgestaltung der Entgasung (ein- oder mehrstufig, Entgasungstöpfe oder -extruder, etc.) sind die Restmonomere üblicherweise ausgewählt aus Trioxan, Formaldehyd, Tetroxan, 1,3-Dioxolan, 1,3-Dioxepan, Ethylenoxid und Oligomeren des Formaldehyds.

Die abgetrennten Restmonomere (Brüdenstrom) werden in üblicher Weise abgezogen. Sie können kondensiert werden, beispielsweise in einem Fallfilmkondensator oder anderen gebräuchlichen Kondensatoren, und in die Polymerisation zurückgeführt werden. Das Mengenverhältnis von Trioxan und Formaldehyd im Brüdenstrom kann durch Einstellung entsprechender Drucke und Temperaturen variiert werden.

- Das erfindungsgemäße Verfahren ist dadurch gekennzeichnet, dass zu jedem Zeitpunkt des Verfahrens im Reaktionsgemisch die Menge der Verbindungen, deren Schmelzpunkt bei 1013 hPa unter 60°C liegt, maximal 0,1 Gew.-% beträgt. Bevorzugt beträgt die genannte Menge maximal 0,05 Gew.-%. Ebenfalls bevorzugt liegt der Schmelzpunkt der Verbindungen bei 1013 hPa unter 25°C.

Bei der Berechnung dieser Menge werden das POM, die Monomere, Comonomere, Polymerisationsinitiatoren, Desaktivatoren und Regler nicht mitgerechnet, wohl aber die bei ihrer Zugabe ggf. verwendeten Lösungsmittel oder sonstigen Zusatzstoffe.

Mit dem Begriff Verfahren sind alle Verfahrensschritte vom Monomeransatz (d.h. vor dem Starten der Polymerisation) bis zum Ende der Restmonomerentfernung (Entgasung) gemeint. Sofern man nach der Restmonomerentfernung dem POM Additive zufügt, fällt diese Additivzugabe jedoch nicht unter den Begriff Verfahren im Sinne der Ansprüche 1 bis 10, d.h. bei der Additivzugabe können durchaus mehr als 0,1 Gew.-% solcher Verbindungen zugefügt werden, deren Schmelzpunkt bei 1013 hPa unter 60°C liegt. Ein Verfahren, welches die Additivzugabe einschließt, ist Gegenstand von Anspruch 11.

Besonders bevorzugt wird das Verfahren im Sinne der Ansprüche 1 bis 10 - also ohne Berücksichtigung der Additivierung - ohne Mitverwendung von Lösungsmitteln durchgeführt, es ist "lösungsmittelfrei".

Ganz besonders bevorzugt verwendet man beim Zufügen von Initiator und Desaktivator nur Monomere, Comonomere oder POM als Verdünnungsmittel bzw. Trägersubstanz - also solche Verbindungen, die ohnehin im Reaktionsgemisch anwesend sind.

### Additive und Abmischung des POM

Erfindungsgegenstand ist auch ein Verfahren zur Herstellung von Polyoxymethylencopolymeren (POM), dadurch gekennzeichnet, dass die Polymere mit dem Verfahren gemäß den Ansprüchen 1 bis 10 hergestellt werden und danach d) übliche Additive zugefügt werden. Demnach setzt sich dieses Verfahren zusammen aus dem erstgenannten Verfahren zur POM-Herstellung und einer anschließenden Additivzugabe.

Die Additivzugabe kann unter Mitverwendung von Lösungsmitteln oder ohne Lösungsmittel erfolgen. Geeignete Additive sind beispielsweise
- Talkum,
- Polyamide, insbesondere Mischpolyamide,
- Erdalkalisilikate und Erdalkaliglycerophosphate,
- Ester oder Amide gesättigter aliphatischer Carbonsäuren,
- Ether, die sich von Alkoholen und Ethylenoxid ableiten,
- unpolare Polypropylenwachse,
- Nukleierungsmittel,
- Füllstoffe,
- schlagzäh modifizierende Polymere, insbesondere solche auf Basis von Ethylen-Propylen (EPM)- oder Ethylen-Propylen-Dien (EPDM)-Kautschuken,
- Flammschutzmittel,
- Weichmacher,
- Haftvermittler,
- Farbstoffe und Pigmente,
- Formaldehyd-Fänger, insbesondere aminsubstituerte Triazinverbindungen, Zeolithe oder Polyethylenimine
- Antioxidantien, insbesondere solche mit phenolischer Struktur, Benzophenonderivate, Benzotriazolderivate, Acrylate, Benzoate, Oxanilide und sterisch gehinderte Amine (HALS = hindered amine light stabilizers).

Diese Zusatzstoffe sind bekannt und beispielsweise in Gächter/Müller, Plastics Additives Handbook, Hanser Verlag München, 4. Auflage1993, Reprint 1996 beschrieben.

Die Menge der Additive hängt vom verwendeten Additiv und der gewünschten Wirkung ab. Dem Fachmann sind die üblichen Mengen bekannt. Die Additive werden, falls mitverwendet, in üblicher Weise zugefügt, beispielsweise einzeln oder gemeinsam, als solche, als Lösung bzw. Suspension oder bevorzugt als Masterbatch.

Man kann die fertige POM-Formmasse in einem einzigen Schritt herstellen, indem z.B. man das POM und die Additive in einem Extruder, Kneter, Mischer oder einer anderen geeigneten Mischvorrichtung unter Aufschmelzen des POM vermischt, die Mischung austrägt und anschließend üblicherweise granuliert. Jedoch hat es sich als vorteilhaft erwiesen, einige oder alle der Komponenten zunächst in einem Trockenmischer oder einem anderen Mischapparat "kalt" vorzumischen und die erhaltene Mischung in einem zweiten Schritt unter Aufschmelzen des POM - ggf. unter Zugabe weiterer Komponenten - in einem Extruder oder sonstigen Mischvorrichtung zu homogenisieren. Insbesondere kann es vorteilhaft sein, zumindest das POM und das Antioxidans (falls mitverwendet) vorzumischen.

Der Extruder bzw. die Mischvorrichtung kann mit Entgasungsvorrichtungen versehen sein, beispielsweise um Restmonomere oder sonstige flüchtige Bestandteile auf einfache Weise zu entfernen. Die homogenisierte Mischung wird wie üblich ausgetragen und vorzugsweise granuliert.

Die Additivzugabe kann besonders schonend ausgestaltet werden, indem man die Verweilzeit zwischen dem Austrag aus der Entgasungsvorrichtung und dem Eintrag in Mischvorrichtung, in der die Additive zugefügt werden, minimiert. Dazu kann man beispielsweise den Entgasungstopf unmittelbar auf den Einzug des Extruders montieren, der zur Abmischung mit den Additiven verwendet wird.

Die Polyoxymethylencopolymere, erhältlich nach dem erfindungsgemäßen Verfahren zur POM-Herstellung (Ansprüche 1 bis 10), oder nach dem erfindungsgemäßen Verfahren zur POM-Herstellung und Additivzugabe (Anspruch 11), sind ebenfalls Gegenstand der Erfindung. Aus den Copolymeren lassen sich Formteile aller Art herstellen.

Indem das erfindungsgemäße Verfahren mit maximal 0,01 Gew.-% Verbindungen mit einem Schmelzpunkt unter 60°C (1013 hPa) und bevorzugt lösungsmittelfrei durchgeführt wird, ist es möglich, die bei der Entgasung abgetrennten Restmonomere unmittelbar und ohne weitere Reinigung in die Polymerisation zurückzuführen. Eine Anreicherung oder Aufpegelung von Zusatzstoffen bei der Rückführung der Restmonomere wird ebenso vermieden wie ein Ausschwitzen von Zusatzstoffen aus dem fertigen Formteil. Nebenreaktionen, welche die Polymerisation stören könnten, werden vermindert.

### Beispiele

Als Initiator für die nachfolgend beschriebene Polymerisation wurde Perchlorsäure eingesetzt, und zwar in Form einer 0,01 gew.-%igen Lösung von 70 gew.-%iger wässriger Perchlorsäure in 1,3-Dioxolan.

Als Desaktivator setzte man Natriummethanolat in Form eines Masterbatches ein. Der Masterbatch enthielt ein polymeres POM-Copolymer aus Trioxan und 3,5 Gew.-% Butandiolformal (Handelsprodukt Ultraform® N 2320 von BASF) und 0,0021 Gew,-% Natriummethanolat.

Eine Monomermischung bestehend aus 96,995 Gew.-% Trioxan, 3 Gew.-% Dioxolan und 0,005 Gew.-% Methylal wurde mit einem Volumenstrom von 5 kg/h kontinuierlich in einen Polymerisationsreaktor dosiert. Der Reaktor war ein mit statischen Mischern versehener Rohrreaktor und wurde bei 150°C und 30 bar betrieben.

Als Initiator wurde 0,1 ppmw Perchlorsäure als Lösung in 1,3-Dioxolan (siehe oben) in den Monomerstrom eingemischt. Nach einer Polymerisationszeit (Verweilzeit) von 2 min wurde als Desaktivator Natriummethanolat (als Masterbatch, siehe oben) in die Polymerschmelze dosiert und eingemischt, sodass er in 10-fachem molaren Überschuss zum Initiator vorlag. Die Verweilzeit in der Desaktivierungszone betrug 3 min.

Die Polymerschmelze wurde durch eine Rohrleitung abgezogen und über ein Regelventil in einen ersten Entgasungstopf entspannt, der bei 190°C und 3 bar betrieben wurde. Die Brüden wurden aus dem Topf über eine Rohrleitung in einen Fallfilmkondensator abgezogen und dort bei 118°C und 3,5 bar mit einem Trioxan-Feed in Kontakt gebracht. Dabei wurden Teile des Brüdens niedergeschlagen und die erhaltene Monomermischung in den Reaktor zurückgeführt. Der nicht niedergeschlagene Brüdenanteil wurde über ein Druckhalteventil einer Abgasleitung zugeführt.

Aus dem ersten Entgasungstopf wurde die Schmelze durch eine Rohrleitung abgezogen und über ein Regelventil in einen zweiten Entgasungstopf entspannt, der mit einer Abgasleitung versehen war. Die Temperatur des Entgasungstopfs betrug 190°C und der Druck war Umgebungsdruck. Der Topf wies keinen Boden auf und war unmittelbar auf den Zufuhrdom eines Zweischneckenextruders ZSK 30 von Werner & Pfleiderer montiert, sodass das entgaste Polymer aus dem Topf direkt auf die Extruderschnecken fiel.

Der Extruder wurde bei 190°C und mit einer Schneckendrehzahl von 150 Upm betrieben und war mit Entgasungsöffnungen versehen, die bei 250 mbar betrieben wurden. Außerdem wies er eine Zufuhröffnung für Zusatzstoffe auf, durch die 0,5 kg/h des Antioxidans Ethylenbis(oxyethylen)bis[3-(5-tert-butyl-4-hydroxy-m-tolyl)propionat] (Handelsprodukt Irganox® 245 von Fa. Ciba Specialty Chemicals) zudosiert wurden. Das Produkt wurde in üblicher Weise ausgetragen, abgekühlt und granuliert.

Das Beispiel zeigt, dass zur Dosierung des Initiators 1,3-Dioxolan, also das Comonomer verwendet wurde. Der Desaktivator wurde gelöst in einem POM zudosiert.

## Patentansprüche

1. Verfahren zur Herstellung von Polyoxymethylencopolymeren (POM) durch a) Polymerisation eines Reaktionsgemisches enthaltend geeignete Hauptmonomere und Comonomere sowie einen Polymerisationsinitiator und ggf. einen Regler, b) Zugabe eines Desaktivators, und c) Entfernung der Restmonomeren, wobei zu jedem Zeitpunkt des Verfahrens im Reaktionsgemisch die Menge der Verbindungen, deren Schmelzpunkt bei 1013 hPa unter 60°C liegt, maximal 0,1 Gew.-% beträgt, wobei das POM, die Monomere, Comonomere, Polymerisationsinitiatoren, Desaktivatoren und Regler nicht mitgerechnet werden und wobei der Desaktivator und der Initiator dem Reaktionsgemisch gelöst in einer Teilmenge der Hauptmonomere oder der Comonomere oder in einem oligomeren oder polymerem POM, zugefügt wird.

2. Verfahren nach Anspruch 1, **dadurch gekennzeichnet, dass** der Schmelzpunkt der Verbindungen bei 1013 hPa unter 25°C liegt.

3. Verfahren nach den Ansprüchen 1 bis 2, **dadurch gekennzeichnet, dass** die Polymerisation kationisch initiiert wird.

4. Verfahren nach den Ansprüchen 1 bis 3, **dadurch gekennzeichnet, dass** als Polymerisationsinitiator Protonensäuren verwendet werden.

5. Verfahren nach den Ansprüchen 1 bis 4, **dadurch gekennzeichnet, dass** die Hauptmonomere ausgewählt sind aus Trioxan und anderen cyclischen oder linearen Formalen.

6. Verfahren nach den Ansprüchen 1 bis 5, **dadurch gekennzeichnet, dass** der Polymerisationsinitiator dem Reaktionsgemisch ohne Mitverwendung von Lösungsmitteln zugefügt wird.

7. Verfahren nach den Ansprüchen 1 bis 6, **dadurch gekennzeichnet, dass** der Desaktivator dem Reaktionsgemisch ohne Mitverwendung von Lösungsmitteln zugefügt wird.

8. Verfahren nach den Ansprüchen 1 bis 7, **dadurch gekennzeichnet, dass** der Polymerisationsinitiator dem Reaktionsgemisch gelöst in einer Teilmenge oder der Gesamtmenge der Comonomere zugefügt wird.

9. Verfahren nach den Ansprüchen 1 bis 8, **dadurch gekennzeichnet, dass** die Konzentration des Desaktivators in der Desaktivatorlösung von 0,001 bis 10 Gew.-% beträgt.

10. Verfahren nach den Ansprüchen 1 bis 9, **dadurch gekennzeichnet, dass** das Verfahren ohne Mitverwendung von Lösungsmitteln durchgeführt wird.

11. Polyoxymethylencopolymere, erhältlich nach dem Verfahren gemäß den Ansprüchen 1 bis 10.

## Claims

1. A process for preparing polyoxymethylene copolymers (POMs) by a) polymerizing a reaction mixture comprising suitable main monomers and comonomers and also a polymerisation initiator and, if appropriate, a regulator, b) adding a deactivator and c) removing the residual monomers, wherein the amount of compounds whose melting point at 1013 hPa is below 60° C present in the reaction mixture at any point in time during the process is not more than 0.1% by weight, with the POM, the monomers, comonomers, polymerization initiators, deactivators and regulators not being included in the calculation, and the deactivator and the initiator are added to the reaction mixture as a solution in a partial amount of the main monomers or the comonomers or in an oligomeric or polymeric POM.

2. The process according to claim 1, wherein the melting point of the compounds at 1013 hPa is below 25°C.

3. The process according to claim 1 or 2, wherein the polymerisation is initiated cationically.

4. The process according to any of claims 1 to 3, wherein protic acids are used as polymerisation initiator.

5. The process according to any of claims 1 to 4, wherein the main monomers are selected from among trioxane and other cyclic or linear formals.

6. The process according to any of claims 1 to 5, wherein the polymerization initiator is added to the reaction mixture without concomitant use of solvents

7. The process according to any of claims 1 to 6, wherein the deactivator is added to the reaction mixture without concomitant use of solvents.

8. The process according to any of claims 1 to 7, wherein the polymerisation initiator is added to the reaction mixture as a solution in a partial amount or the total amount of the comonomers.

9. The process according to any of claims 1 to 8, wherein the concentration of the deactivator in the deactivator solution is from 0.001 to 10% by weight.

10. The process according to any of claims 1 to 9, wherein the process is carried out without concomitant use of solvents.

11. A polyoxymethylene copolymer obtainable by the process according to any of claims 1 to 10.

## Revendications

1. Procédé pour la préparation de copolymères de polyoxyméthylène (POM) par a) polymérisation d'un mélange réactionnel contenant des monomères principaux et des comonomères appropriés ainsi qu'un initiateur de polymérisation et, le cas échéant, und agent de régulation, b) addiction d'un désactivateur et c) élimination des monomères résiduels, où à chaque moment du procédé, dans le mélange réactionnel, la quantité de composés dont le point de fusion à 1013 hPa est inférieur à 60°C, est au maximum de 0,1% en poids, le POM, les monomères, les comonomères, les initiateurs de polymérisation, les désactivateurs et les agents de régulation n'étant pas inclus dans le calcul et le désactivateur et l'initiateur étant ajoutés au mélange réactionnel en étant dissous dans une quantité partielle des monomères principaux ou des comonomères ou dans un POM oligomère ou polymère.

2. Procédé selon la revendication 1, **caractérisé en ce que** le point de fusion des composés à 1013 hPa est inférieur à 25°C.

3. Procédé selon les revendications 1 à 2,
**caractérisé en ce que** la polymérisation est initiée par voie cationique.

4. Procédé selon les revendications 1 à 3, **caractérisé en ce qu'**on utilise des acides protoniques comme initiateur de polymérisation.

5. Procédé selon, les revendications 1 à 4, **caractérisé en ce que** les monomères principaux sont choisis parmi le trioxane et d'autres formals cycliques ou linéaires.

6. Procédé selon les revendications 1 à 5, **caractérisé en ce que** l'initiateur de polymérisation est ajouté au mélange réactionnel sans utilisation conjointe de solvants.

7. Procédé selon les revendications 1 à 6, **caractérisé en ce que** le désactivateur est ajouté au mélange réactionnel sans utilisation conjointe de solvants.

8. Procédé selon les revendications 1 à 7, **caractérisé en ce que** l'initiateur de polymérisation est ajouté au mélange réactionnel en étant dissous dans une quantité partielle ou la quantité totale de comonomères.

9. Procédé selon les revendications 1 à 8, **caractérisé en ce que** la concentration en désactivateur dans la solution de désactivateur est de 0,001 à 10% en poids.

10. Procécé selon les revendications 1 à 9, **caractérisé en ce que** le procécé est réalisé sans utilisation conjointe de solvants.

11. Copolymères de polyoxyméthylène, pouvant être obtenus selon le procédé selon les revendications 1 à 10.
